(19) **Europäisches Patentamt**
**European Patent Office**
**Office européen des brevets**

(11) **EP 2 062 203 B1**

(12) **FASCICULE DE BREVET EUROPEEN**

(45) Date de publication et mention
de la délivrance du brevet:
**26.10.2011 Bulletin 2011/43**

(51) Int Cl.:
***G06K 19/077*** (2006.01)   ***H01Q 9/26*** (2006.01)

(21) Numéro de dépôt: **07823440.8**

(22) Date de dépôt: **20.08.2007**

(86) Numéro de dépôt international:
**PCT/FR2007/001392**

(87) Numéro de publication internationale:
**WO 2008/031932 (20.03.2008 Gazette 2008/12)**

(54) **TRANSPONDEUR RFID-UHF POUR L'IDENTIFICATION DE SURFACES VITRÉES**

**UHF-RFID-TRANSPONDER ZUR IDENTIFIKATION VERGLASTER FLÄCHEN**

**UHF-RFID TRANSPONDER FOR THE IDENTIFICATION OF GLAZED SURFACES**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.09.2006 FR 0607928**

(43) Date de publication de la demande:
**27.05.2009 Bulletin 2009/22**

(73) Titulaire: **Systemes Et Technologies Identification**
**13850 Greasque (FR)**

(72) Inventeurs:
• **MARGALEF, Aurélie**
**30820 Caveirac (FR)**
• **PLUVINAGE, Guy**
**13710 Fuveau (FR)**
• **POITRAT, Sylvain**
**13850 Greasque (FR)**

(74) Mandataire: **GPI & Associés**
**1330, rue Guillibert de la Lauzière**
**EuroParc de Pichaury, Bât B2**
**13856 Aix en Provence Cedex 3 (FR)**

(56) Documents cités:
**US-A1- 2004 119 593     US-A1- 2004 196 179**
**US-A1- 2006 033 624**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention est du domaine des systèmes d'identification, de contrôle voire de comptage d'éléments ou de produits pourvus de surfaces vitrées. Elle concerne plus particulièrement un transpondeur RFID-UHF et sa méthode d'optimisation pour identifier, contrôler et éventuellement compter des objets, notamment applicable dans le domaine des véhicules de locomotion par air, par terre et par mer.

On entend par RFID (« Radio Frequency Identification »), la reconnaissance et l'identification par radiofréquence de tout objet, y compris d'animaux ou de personnes par utilisation d'une transmission de données par radiofréquence, typiquement de 125 KHz (domaine Basse Fréquence (BF)), 13,56 MHz (domaine Haute Fréquence (HF)) ou encore entre 860 et 960 MHz (domaine Ultra Haute Fréquence (UHF)).

Plus particulièrement, la technologie RFID est utilisée pour la traçabilité des objets de toutes sortes. Elle intervient le plus souvent sous la forme d' « étiquettes », en remplacement du système des codes barres, en raison notamment de sa fiabilité, de sa simplicité d'utilisation et de la possibilité de lecture à travers différents matériaux. Bien évidemment, l'emploi d'étiquettes RFID est également retenu quand les conditions environnementales ne conviennent pas aux systèmes à codes barres (température, humidité,...).

En pratique, la technologie de traçabilité relative aux étiquettes RFID autorise la lecture et l'écriture à distance d'informations de sorte à permettre la réalisation d'objectifs très variés à partir de l'identification desdits objets, par exemple et non exclusivement dans les secteurs du contrôle, de la sécurité, du comptage ou encore de la conduite de processus industriels et de l'automatisation.

Ces étiquettes RFID sont appelées plus communément « transpondeur » ou plus simplement « tag » et correspondent à un équipement destiné à recevoir un premier signal et à élaborer, en réponse immédiate, un second signal, différent du premier signal, transmettant une information pertinente.

Au plan du principe, on rappelle que les composants d'un dispositif RFID comprennent essentiellement :

- un lecteur RFID ou interrogateur associé à une antenne, ainsi qu'à un système annexe de traitement d'informations ou de données,

- un transmetteur/répondeur dit transpondeur RFID disposé sur un élément en général en cours de déplacement et capable de répondre à un signal émis par un lecteur/interrogateur RFID, ce transpondeur étant équipé au moins d'un circuit électronique associé à une antenne.

Dans ces conditions, la communication dans le domaine Ultra Haute Fréquence entre le transpondeur RFID et le lecteur/interrogateur RFID s'effectue à l'aide d'une modulation ASK (« Amplitude Shift Keying » en appellation anglaise). Ainsi, le lecteur/interrogateur envoie une modulation ASK au transpondeur qui lui permet de se charger. Ensuite, le lecteur/interrogateur émet une onde non modulée ou CW (« Continuous Wave » en appellation anglaise) pour que le transpondeur puisse répondre. Le transpondeur module alors l'onde incidente CW par une charge, contrôlée par un micro-contrôleur, et envoie une information sous forme ASK ou PSK (« Phase Shift Keying » en appellation anglaise) : ce système de « rétro-modulation » est dit « backscattered » en langue anglaise.

Ainsi, tout transpondeur RFID disposé dans le champ de lecture et accordé au lecteur RFID retransmet un signal en retour vers la propre antenne associée audit lecteur RFID. De la sorte, il s'établit un échange d'informations entre le lecteur RFID et tout transpondeur correspondant selon un protocole de communication déterminé.

Il convient également de noter que l'emploi d'un transpondeur RFID spécifique, à savoir présentement passif évite de l'alimenter électriquement, par exemple par une pile, ce qui augmente considérablement la durée de vie de cet organe tout en diminuant les modalités et les coûts d'utilisation. En fait, la transpondeur RFID est « téléalimenté » par l'onde porteuse du lecteur/interrogateur RFID. En effet, ce type de transpondeur est alimenté par le champ électromagnétique produit par le rayonnement de l'antenne du lecteur /interrogateur en présence de façon à activer le circuit électronique dudit transpondeur RFID.

Il importe encore de retenir que selon l'invention, les applications visent notamment l'identification de surfaces vitrées. En d'autres termes, le transpondeur RFID est situé par exemple à l'intérieur d'un véhicule de sorte qu'une surface vitrée est interposée entre celui-ci et le lecteur/interrogateur RFID en présence.

Par le document GB 2308527, on connaît un dispositif de stockage d'informations positionné sur la face arrière d'un pare-brise d'un véhicule, en partie basse de ce pare-brise. Il est bien mis en évidence pour permettre aussi la lecture de caractères ou textes imprimés sur ledit dispositif, aussi bien par le conducteur que par un inspecteur contrôlant par exemple le paiement effectif de taxes, la validité des assurances, les références personnelles du propriétaire du véhicule, ou encore les caractéristiques de ce véhicule... Bien entendu, ces informations sont transmises à un moyen de lecture lorsque ledit dispositif est interrogé par des moyens appropriés et à partir d'un signal d'interrogation présélectionné.

Toutefois, il n'est fait en aucune manière référence à un quelconque mode de réalisation ou de mise en oeuvre du dispositif comme par exemple les caractéristiques de l'onde porteuse, de l'antenne et du circuit associé ou encore aux performances de l'installation.

Par ailleurs, le document US 6121880 fait état d'un transpondeur autocollant RFID conçu pour fonctionner à partir d'une fréquence approximative de 915 MHz en opération et adapté pour être fixé sur une surface vitrée, telle qu'un pare-brise d'un véhicule, par exemple. Pour ce faire, ce transpondeur se présente sous la forme d'un ensemble flexible comprenant un circuit couplé à une antenne, le tout étant intégré dans un logement d'un substrat, lequel débouche sur une première face dudit substrat. Cette première face est revêtue d'une couche protectrice en matière plastique suffisamment robuste pour résister à toute forme d'agression (déchirure, moisissure,...). La seconde face du substrat est pourvue d'un adhésif transparent pour fixer le transpondeur ainsi réalisé à une surface vitrée. Il importe de noter que l'épaisseur du substrat doit être aussi faible que possible et au moins inférieure à 1/16 de pouce soit moins de 1,59 millimètre. En d'autres termes, l'antenne et le circuit associé sont distants de la surface vitrée au plus de cette valeur, à l'épaisseur près et d'ailleurs très faible de l'adhésif. Dans ces conditions, le circuit associé à l'antenne doit inclure une capacité supplémentaire, couplé en parallèle avec l'impédance de l'antenne définie par une capacité en parallèle avec une résistance et une inductance. L'introduction de cette capacité supplémentaire est due à la présence de la surface vitrée. Par suite, la caractéristique de cette capacité est une fonction de la constante diélectrique pour l'épaisseur et le type de vitre ou de verre utilisé. Autrement dit, l'ensemble circuit et antenne est fonctionnel à condition que le transpondeur soit fixé à la surface vitrée, c'est-à-dire sensiblement à moins de 1,59 millimètre du pare-brise d'un véhicule, par exemple. Dans le cas particulier d'une utilisation sur un pare-brise « métallisé », la communication par radiofréquence, au moyen du transpondeur selon le document US 6121880 est empêchée à l'intérieur d'un véhicule. Il est alors proposé de disposer le transpondeur à l'extérieur du véhicule en interposant entre celui-ci et le pare-brise une couche d'un matériau à constante diélectrique et à épaisseur similaires aux caractéristiques dudit pare-brise, afin de ne pas modifier les caractéristiques du transpondeur.

Le document US 6275157 concerne une autre variante d'intégration du transpondeur selon le document US 6121880. Dans le cas présent, le transpondeur est intégré directement dans l'épaisseur soit d'une seule couche de verre, soit entre deux couches d'un ensemble vitré multicouches lors de la fabrication d'un pare-brise d'un véhicule par exemple. Dans ces conditions, la capacité supplémentaire précédemment citée est définie en fonction de la constante diélectrique et de l'épaisseur de la couche unique ou de chaque couche de l'ensemble multicouches.

Enfin, le document WO 03/090151 présente un transpondeur qui comprend au moins successivement à partir de la partie la plus éloignée d'un lecteur RFID, en allant vers ce lecteur :

- une feuille de papier ou plastique servant de base, d'une épaisseur maximale de 4/1000 de pouce, soit 0,1016 millimètre,

- une première couche adhésive d'une épaisseur maximale de 1/1000 de pouce d'épaisseur, soit 0,0254 millimètre,

- une feuille intercalaire (papier ou plastique) d'au plus 8/1000 de pouce, soit 0,2032 millimètre, revêtue d'une deuxième couche adhésive de 0,0254 millimètre d'épaisseur maximale,

- une feuille de papier ou plastique de couverture, similaire à la feuille de base.

Par conséquent, l'épaisseur maximale de l'assemblage est de 0,4572 millimètre et préférentiellement de 15/1000 de pouce au maximum, soit 0,381 millimètre. L'antenne et le circuit électronique associé sont disposés dans une cavité effectuée entre la feuille de couverture et la première couche adhésive, c'est-à-dire dans une cavité d'une épaisseur maximale de 9/1000 de pouce, soit 0,2286 millimètre tout au plus. On en conclut que l'antenne et le circuit électronique sont à une distance au plus égale à 13/1000 de pouce, soit 0,3302 millimètre de la face du transpondeur dirigée vers le lecteur RFID. Dans la mesure où un tel transpondeur est fixé sur une surface vitrée, la partie active (antenne et circuit électronique) étant à très proche distance de cette surface vitrée, ce dispositif présente le même inconvénient que les transpondeurs selon les documents US 6121880 et US 6275157 par exemple, à savoir l'intégration d'une capacité supplémentaire, adaptée à la présence de l'interface vitrée, de sorte que ces dispositifs sont totalement dépendants de leurs substrats.

De plus, on doit noter que le dispositif selon le document WO 03/090151 mentionne l'utilisation du Transpondeur Inlay TAG-it® HF-I qui fonctionne à une fréquence de 13,56 MHz, conformément à la norme ISO 15693. Contrairement à la présente invention, il s'agit du domaine Haute Fréquence pour lequel la détection et l'échange de données sont plus lents que dans le domaine Ultra Haute Fréquence, ce qui conduit dans le domaine Haute Fréquence à des performances réduites comme explicité ultérieurement.

Par ailleurs, on retient encore qu'un Tag Inlay est alors obtenu dans ce cas par une impression d'encre grâce à une imprimante laser.

L'invention telle que définie par les revendications 1 et 14, a pour objectif de remédier aux inconvénients des dispositifs antérieurs tels que ceux notamment décrits ci-dessus, tout en présentant le meilleur compromis en termes de performances par rapport à l'encombrement dudit dispositif. Bien entendu, le transpondeur est de type passif, ce qui permet un gain de coût aussi bien à l'achat qu'en utilisation, mais aussi confère au transpondeur une durée de vie extrêmement importante et évite toutes nuisances liées à l'emploi de piles ou batteries, par exemple.

Selon une réaliation, le transpondeur passif RFID, adapté à un domaine de fréquences compris sensiblement entre 860 MHz et 960 MHz, pour l'identification d'une surface vitrée laquelle comprend une première face avant dirigée vers un lecteur RFID et une deuxième face arrière opposée, est remarquable en ce que l'antenne et le circuit électronique associé, disposés sur un support (ou substrat) sont à une distance d sensiblement comprise entre 5 et 16 millimètres de la deuxième face de ladite surface vitrée.

En effet, on rappelle que les transpondeurs passifs de petit encombrement pour l'identification du verre ou de produits analogues dans les domaines basse fréquence (par exemple 125 KHz) et haute fréquence (par exemple 13,56 MHz), fonctionnent en pratique en liaison avec un lecteurlinterrogateur jusqu'à 1 à 1,5 mètre au maximum avec les niveaux de puissance autorisés par les normes applicables. Ces performances sont insuffisantes pour de nombreuses applications telles que par exemple le contrôle d'accès de véhicules munis d'un tel dispositif.

Pour atteindre des distances de fonctionnement de 5 à 6 mètres, c'est-à-dire pour un contrôle d'accès acceptable d'un véhicule par exemple, il est reconnu que les dimensions d'un tel transpondeur deviennent incompatibles vis-à-vis des dimensions d'une surface vitrée pourtant relativement importantes s'il s'agit d'un pare-brise.

Dans ces conditions, il est apparu que la conception d'un transpondeur RFID-UHF dans les domaines de fréquences autorisés permet un fonctionnement correct entre celui-ci et un lecteur/interrogateur adapté jusqu'à des distances de 10 à 12 mètres.

En conséquence, le transpondeur RFID selon l'invention est avantageusement fonctionnel notamment selon les normes suivantes :

- normes européennes ETSI :

  * autorisant une puissance spécifique d'émission de 500 milliwatts ERP (« Effective Radiated Power ») avec une onde de fréquence de 869,4 MHz, selon la norme ETS 300-220,

  * autorisant une puissance spécifique d'émission de 2 watts ERP avec une onde comprise dans un domaine de fréquences entre 865,6 MHz et 867,6 MHz ;

- norme FCC autorisant une puissance spécifique d'émission de 4 watts EIRP (« Equivalent Isotropie Radiated Power ») avec une onde comprise dans un domaine de fréquences de 902 MHz à 928 MHz aux Etats-Unis, par exemple.

Les recherches conduites dans le cadre de la mise au point du transpondeur passif selon l'invention ont ainsi démontré que la communication s'établit jusqu'à une distance de l'ordre de 12 mètres entre un tel transpondeur et un lecteur/interrogateur malgré l'interposition d'une surface vitrée entre ces deux organes et ceci étant obtenu pour seulement une puissance de 1,75 watt ERP.

Pour une onde de puissance de 900 milliwatts ERP et de fréquence de l'ordre de 866 MHz, la distance de fonctionnement est encore de l'ordre de 7 mètres.

De tels résultats traduisent les excellentes performances du transpondeur selon l'invention exprimées en termes de distance de fonctionnement.

Ces résultats sont d'autant plus importants que :

- l'encombrement du transpondeur, composé d'une antenne associée à un circuit électronique encore appelé par l'homme du métier « puce » ou « chip » en langue anglaise, disposé sur un substrat, est très réduit,

- en raison des plus grandes distances de lecture possibles, on privilégie l'utilisation du domaine UHF au lieu des domaines BF et HF : de la sorte et selon l'invention, les distances de communication entre un transpondeur et un lecteur/interrogateur sont augmentées de façon substantielle avec un produit à la fois passif et de très faible encombrement.

Bien entendu, ces performances ont été rendues possibles en éloignant le transpondeur d'une distance d de l'ordre de 5 à 16 millimètres de la deuxième face de la surface vitrée.

Préférentiellement, cette distance d est sensiblement de 11 millimètres.

De façon avantageuse, il importe également de noter que ces performances sont indépendantes des caractéristiques de la surface vitrée dont la constitution peut être monocouche mais aussi multicouches et la matière métallisée ou non, éventuellement blindée.... De plus, il est observé que des variations du positionnement du transpondeur RFID par rapport à un lecteur/interrogateur RFID sont acceptables dans une certaine plage sans pour autant modifier substantiellement les performances de ce dispositif. Ce résultat permet donc une tolérance certaine du positionnement d'un tel transpondeur dans un véhicule, par exemple par rapport à un lecteur/interrogateur.

Ces performances dépendent intrinsèquement de la distance d précédemment mentionnée.

Selon l'invention, cette distance d est réalisée en pratique en disposant le transpondeur, ou plus exactement le substrat du circuit électronique et de l'antenne associée, dans un boîtier en forme d'un parallélépipède rectangle à base de résine acrylonitrile - butadiène - styrène (abréviation : ABS). Ledit substrat peut être lié audit boîtier par collage de sa première surface sur la surface interne d'une première paroi de ce boîtier ou encore par rivetage, clipsage ou tout autre moyen similaire (glissières ou rainures....).

Dans ces conditions, la surface externe d'une deuxième paroi, parallèle à la première paroi est revêtue d'une couche adhésive pour la fixation dudit boîtier notamment sur un pare-brise, à l'intérieur d'un véhicule.

Ledit substrat est de façon préférée en un matériau à base d'une résine thermodurcissable époxy d'une épaisseur de 0,8 millimètre sachant que la méthode de fabrication de l'antenne du transpondeur met en oeuvre le moyen PCB simple face (« Printed Circuit Board » en langue anglaise), c'est-à-dire que l'antenne se présente sous la forme d'un circuit imprimé sur une deuxième surface du substrat époxy opposée à ladite première surface.

Avantageusement, le circuit électronique est monté en mode TSSOP (« Thin Shrink Small Outline Package » en appellation anglaise) permettant un assemblage au circuit imprimé par un procédé classique d'où une simplification évidente de réalisation et d'utilisation du transpondeur et consécutivement un modique coût d'achat tout en assurant une excellente fiabilité du dispositif, un bon fonctionnement entre -20°C et + 70°C et l'absence de maintenance.

De cette façon, l'antenne et le circuit électronique sont dirigés vers la surface interne (ou deuxième face) d'un pare-brise par exemple et au travers duquel le transpondeur ainsi réalisé communique avec un lecteur/interrogateur lorsque le champ de lecture intercepte ledit transpondeur.

De façon avantageuse encore, une attention particulière est portée au dimensionnement de l'antenne de manière qu'elle présente la plus grande surface de captation possible tout en conduisant à une faible surface du substrat et par suite à de faibles dimensions du boîtier par rapport, en particulier, à la surface d'un pare-brise de véhicule.

Pour ce faire, l'antenne est un dipôle linéaire. Plus précisément, il s'agit d'un dipôle replié non fermé comportant une première et une deuxième branches telles que :

- chaque branche est en forme de U de manière à posséder successivement un tronçon primaire, un tronçon intermédiaire et un tronçon secondaire lequel est parallèle au tronçon primaire,

- le tronçon primaire de la première branche et le tronçon primaire de la deuxième branche sont en alignement de part et d'autre du circuit électronique auquel ils sont reliés.

- le tronçon intermédiaire de la première branche est parallèle au tronçon intermédiaire de la deuxième branche, ces tronçons intermédiaires étant de plus perpendiculaires par rapport à leurs tronçons primaires respectifs,

- le tronçon secondaire de la première branche est en outre disposé entre lesdits tronçons principaux et le tronçon secondaire de la deuxième branche, sans contact avec le tronçon secondaire de la deuxième branche.

Par ailleurs, cette disposition met en évidence :

- un premier intervalle entre les deux tronçons primaires et le tronçon secondaire de la première branche,

- un deuxième intervalle entre les deux tronçons secondaires,

- un troisième intervalle entre l'extrémité externe de la première branche et le tronçon intermédiaire de la deuxième branche.

De cette façon, on comprend que la forme générale de cette antenne correspond à deux U sensiblement en vis-à-vis et partiellement imbriqués.

La présente invention concerne également une méthode pour optimiser l'antenne dipôle repliée et non fermée conforme à l'invention.

Selon l'invention et si l'on désigne par :

$Z_p$ : l'impédance du circuit électronique,

$Z_a$ : l'impédance de l'antenne,

$L$ : la distance maximale entre les deux tronçons intermédiaires,

$e_1$ : la largeur de la première branche,

$e_2$ : la largeur de la deuxième branche,

$E$ : le premier intervalle,

$C$ : le deuxième intervalle,

$S$ : le troisième intervalle,

la méthode d'optimisation du dimensionnement de l'antenne est remarquable en ce qu'elle comprend les étapes suivantes :

a) si $Z_a$ est supérieur à $Z_p$, on diminue soit $e_1$, soit $E$ ou on augmente $e_2$, alors que si $Z_a$ est inférieur à $Z_p$, on effectue les opérations inverses (augmentation soit de $e_1$, soit de $E$ ou diminution de $e_2$), et on recalcule $Z_a$,

b) on répète l'étape a) jusqu'à ce que les parties réelles $R_a$ et imaginaires $X_a$ de $Z_a$ soient proches respectivement des parties réelles et imaginaires $R_p$ et $X_p$ de $Z_p$,

c) quand l'étape b) est réalisée, on ajuste par calcul $R_a$ et $X_a$ respectivement à $R_p$ et $X_p$ par itérations

successives de sorte que :

- si on augmente C, Ra augmente et Xa diminue,

- si on diminue C, Ra diminue et Xa augmente,

- si on fait varier S, Ra reste constante et Xa varie dans le sens inverse.

En effet, on obtient les meilleures caractéristiques du transpondeur RFID-UHF selon l'invention lorsque l'impédance Za de l'antenne est égale à la valeur conjuguée de l'impédance Zp du circuit électronique associé, soit :

$$Za = Zp^*$$

avec :

Za = Ra + j Xa

Zp = Rp - j Xp

Zp* = Rp - j Xp

j = nombre complexe de module 1 et d'argument + II/2

En d'autres termes, il y a adaptation entre l'antenne et le circuit électronique (fonctionnement optimal du transpondeur) quand la topologie de l'antenne, pour un circuit électronique donné, permet l'égalité d'une part entre Ra et Rp et d'autre part entre Xa et Xp.

Par ailleurs, la topologie de l'antenne doit aussi satisfaire l'exigence suivant laquelle le circuit électronique ne peut pas être efficace s'il est placé dans un circuit fermé lorsque ce circuit électronique est pourvu d'un redresseur convertissant un signal alternatif en une tension électrique constante. En effet, un courant électrique continu traverserait les deux bornes du circuit électronique provoquant alors un défaut de fonctionnement du transpondeur. Pour éviter un tel dysfonctionnement, on doit introduire une capacité de couplage bloquant le courant continu tout en laissant passer le courant électrique de haute fréquence, sans pour autant introduire de nouvelles pertes.

Cette capacité de couplage peut être introduite de deux manières :

- par l'ajout « physique » d'une capacité suivant le dessin de l'antenne,

- par le dessin de l'antenne, sachant que deux pistes parallèles proches l'une de l'autre (espacées de quelques millimètres) créent un couplage capacitif.

Pour des raisons économiques et d'encombrement, la topologie de l'antenne adaptée à l'obtention d'un couplage capacitif correspond selon l'invention à un dipôle replié mais non fermé qui permet un grand degré de liberté quant à la disposition des deux branches qui entourent le circuit électronique.

Par conséquent, tout en s'imposant un minimum d'encombrement, on fait varier l'agencement et les dimensions des différentes branches de l'antenne afin d'adapter son impédance à l'impédance conjuguée du circuit électronique tout en créant un couplage capacitif.

Bien évidemment, on conçoit que l'optimisation de la topologie de l'antenne prend en compte les caractéristiques physiques suivantes :

- la permittivité (s) et la perméabilité (p) des différents matériaux ainsi que l'angle de perte (tan δ) en fonction de la fréquence de fonctionnement,

- les dimensions et la forme exacte des différents éléments du dispositif,

- la fréquence et la direction de polarisation de l'onde électromagnétique.

L'invention et ses avantages apparaîtront avec plus de détails dans le cadre de la description suivante, qui illustre des exemples de réalisation préférés, donnés sans aucun caractère limitatif, en référence aux figures annexées, telles que :

- la figure 1 est une vue en perspective du boîtier du transpondeur, disposé derrière une surface vitrée, par rapport à un lecteur/interrogateur,

- la figure 2 est une coupe suivant la ligne II-II de la figure 1, où le substrat est solidaire d'un boîtier recevant le transpondeur selon une première variante par collage,

- la figure 3 est une coupe suivant la ligne II-II de la figure 1 montrant selon une deuxième variante la fixation du substrat au boîtier par rainures,

- la figure 4 est une coupe suivant le ligne III-III de la figure 1,

- la figure 5 est un diagramme illustrant l'effet sur les performances du déplacement du transpondeur par rapport à une surface vitrée,

- la figure 6 est une illustration montrant l'absence d'effet de l'épaisseur d'une surface vitrée quand le transpondeur est écarté d'une surface vitrée.

Les éléments présents dans plusieurs figures distinctes sont affectés d'une seule et même référence.

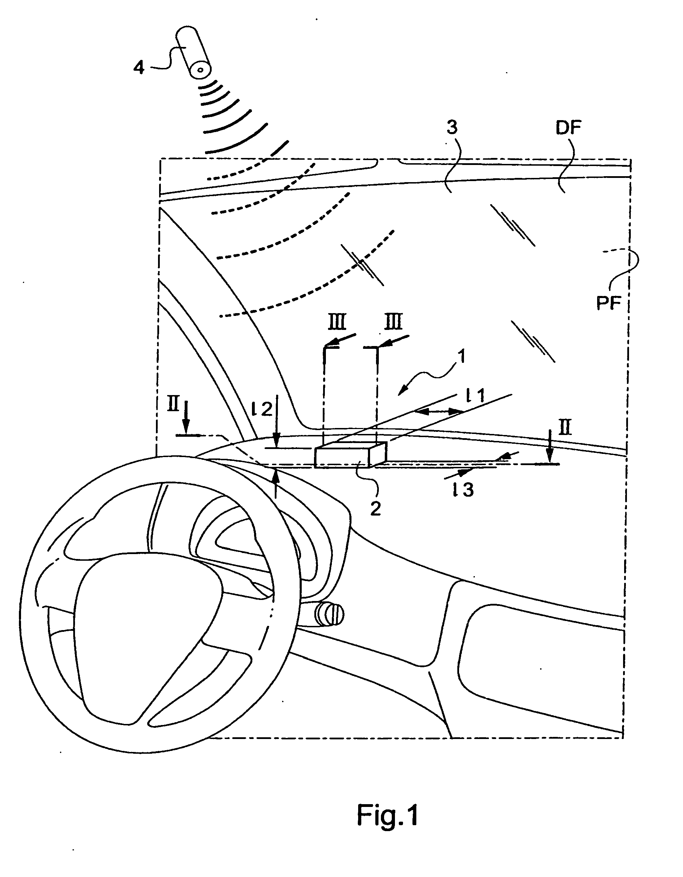

La figure 1 montre un transpondeur 1 RFID-UHF, pour l'identification selon l'invention d'une surface vitrée 3, contenu dans un boîtier 2 en forme d'un parallélépipède rectangle qui adhère sur la surface vitrée 3, laquelle comporte une première face PF dirigée vers un lecteur/interrogateur 4 de type également RFID-UHF.

Le boîtier 2 adhère sur la deuxième face DF de la surface vitrée 3 par un moyen approprié.

De cette façon, le transpondeur 1 et le lecteur/interrogateur 4 sont accordés pour échanger des informations sous forme de signaux transportés par une onde électromagnétique UHF dans un domaine de fréquences compris entre 860 MHz et 960 MHz.

A titre d'exemple, les dimensions du boîtier 2 sont les suivantes :

I1 = 70 millimètres environ

I2 = 11 à 15 millimètres environ

I3 = 30 millimètres environ

Dans ces conditions, l'épaisseur des parois du boîtier 2 est de l'ordre de 0,8 millimètre.

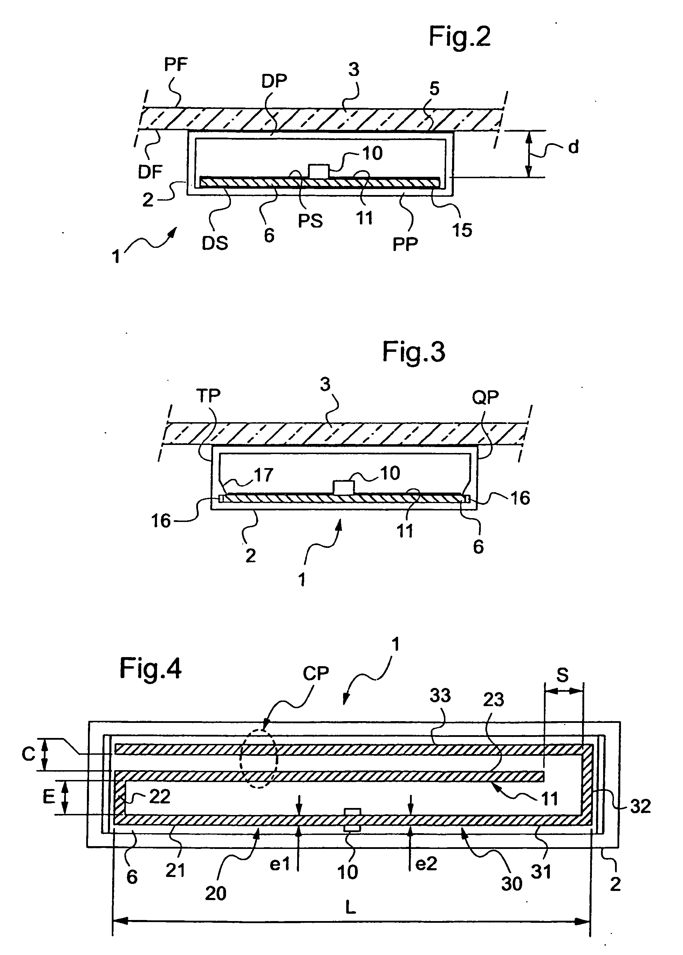

La figure 2 est une coupe selon II-II de la figure 1 qui montre les éléments suivants :

- une antenne 11 reliée à un circuit électronique 10, lesquels sont disposés sur un substrat 6 pour constituer le transpondeur 1,

- une couche adhésive 15 disposée sur la première surface PS du substrat 6 de façon à lier cette première surface PS à la surface interne d'une première paroi PP du boîtier 2,

- le boîtier 2 comportant sur la face externe d'une deuxième paroi DP, sensiblement parallèle à la première paroi PP, une couche adhésive 5 pour la fixation du boîtier 2 sur la deuxième face DF de la surface vitrée 3.

Dans la mesure où l'épaisseur d'une couche adhésive, en l'occurrence la couche 5, est de l'ordre de 0,2 millimètre, le transpondeur 1, et plus précisément l'antenne 11, est à une distance $d$ de la surface vitrée 3 d'une valeur comprise entre 5 millimètres et 16 millimètres.

En d'autres termes, l'antenne 11 notamment est espacée de la surface interne de la deuxième paroi PP de 4 à 15 millimètres.

Préférentiellement, la distance $d$ est de 11 millimètres.

La figure 3 est une coupe suivant la ligne III-III de la figure 1 montrant une deuxième variante de fixation du substrat 6 au boîtier 2 au moyen de deux rainures 16, agencées respectivement sur les troisième TP et quatrième QP parois dudit boîtier 2, grâce à des excroissances locales 17 de ces parois TP et QP, par exemple en forme de coin.

Bien évidemment, le substrat 6 peut être lié à la première paroi PP du boîtier 2 par tout autre moyen similaire (clipsage, rivetage,...).

De même, le boîtier 2 peut être étanche ou non en fonction des conditions d'utilisation du transpondeur 1.

Avantageusement, le boîtier 2 est en un matériau de type ABS.

Egalement de façon avantageuse, le substrat 6 est en un matériau à base de résine thermodurcissable époxy sous forme de plaque et revêtu d'une couche métallique conductrice de l'électricité de façon que l'antenne 11 se présente sous la forme d'un circuit imprimé sur la deuxième surface DS du substrat 6, opposée à la première surface PS de ce substrat 6.

Par ailleurs, le circuit électronique 10 est monté en mode TSSOP, c'est-à-dire qu'il est soudé, éventuellement manuellement, à l'antenne 11.

La figure 4 illustre le positionnement en vue de face de l'antenne 11, reliée au circuit électrique 10, le tout assemblé sur le substrat 6 et disposé dans le boîtier 2.

Dans ces conditions, on remarque que l'antenne 11 est un dipôle linéaire.

De plus, il s'agit d'un dipôle linéaire replié, non fermé qui comprend une première branche 20 en une deuxième branche 30 de façon que :

- chaque branche est en forme de U de façon que :

  • la branche 20 possède successivement un tronçon primaire 21, un tronçon intermédiaire 22 et un tronçon secondaire 23 lequel est parallèle au tronçon primaire 21,
  • la branche 30 possède successivement un tronçon primaire 31, un tronçon intermédiaire 32 et un tronçon secondaire 33 lequel est parallèle au tronçon primaire 31,

- le tronçon primaire 21 et le tronçon primaire 31, de part et d'autre du circuit électronique 10 sont reliés audit circuit électronique 10 et sont en alignement l'un par rapport à l'autre.

- le tronçon intermédiaire 22 est parallèle au tronçon intermédiaire 32, ces tronçons intermédiaires (22, 32) étant de plus perpendiculaires par rapport à leur tronçons primaires respectifs (21, 31),

- le tronçon secondaire 23 est en outre disposé entre lesdits tronçons primaires (21, 31) et le tronçon secondaire 33.

De la sorte, il est créé un couplage capacitif CP en rapprochant les tronçons secondaires 23 et 33 pour empêcher l'alimentation du circuit électronique en courant continu tout en permettant le passage des courants alternatifs.

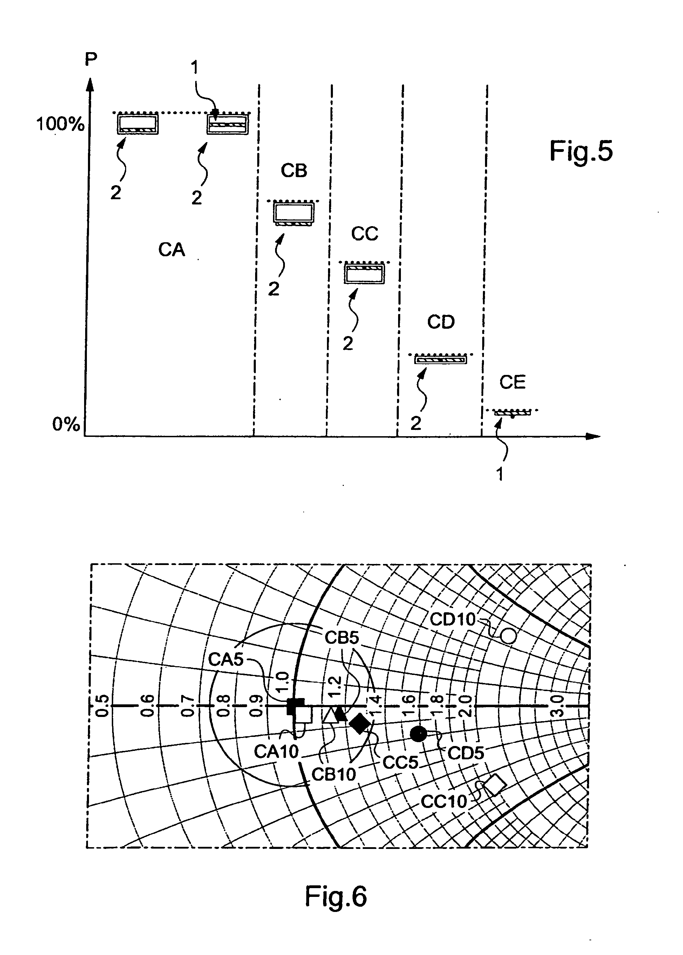

La technologie conforme à l'invention résulte de simulations électromagnétiques et de tests pratiques de validation. A cet effet, la figure 5 présente un diagramme illustrant l'effet sur les performances du déplacement du transpondeur 1 par rapport à une surface vitrée 3.

La performance de référence est fixée à 7 mètres pour laquelle il a déjà été stipulé que la puissance est sensiblement de 900 milliwatts ERP avec une fréquence de l'ordre de 866 MHz, selon l'invention.

On a retenu pour comparaison cinq configurations pour lesquelles on obtient les performances p suivantes où p représente le rapport en pourcentage entre la distance de communication possible et la distance de référence :

- configuration CA : p=100% si $\underline{d}$ est compris entre 5 et 16 millimètres,

- configuration CB : p vaut environ 70% si le transpondeur 1 est sur la surface externe de la première paroi PP du boîtier 2,

- configuration CC : p vaut environ 55% si le transpondeur 1 est dans un boîtier 2, sur la surface interne de la deuxième paroi DP,

- configuration CD : p vaut environ 25% si le transpondeur 1 est dans un boîtier 2 dont la dimension l3 est moins importante par rapport aux configurations CA, CB et CC, le transpondeur 1 étant sur la surface interne de la deuxième paroi DP,

- configuration CE : p vaut 7% seulement si le transpondeur 1 est contre la surface vitrée.

De la sorte, l'invention est particulièrement bien adaptée à une mise en oeuvre pour l'identification d'une surface vitrée d'un véhicule dès lors que la distance $\underline{d}$ est comprise entre 5 et 16 millimètres.

Compte tenu de cette technologie originale, on comprend aisément, en conséquence, qu'un tel transpondeur 1 peut être utilisé pour identification de surfaces vitrées, notamment de véhicules et ceci d'autant plus que la nature et l'épaisseur du verre ou d'un matériau équivalent sont pratiquement sans effet sur les performances du produit.

En effet, la figure 6 présente un abaque de Smith connu par l'homme du métier pour apprécier dans le cas présent, la bonne adaptation du transpondeur 1 selon l'invention et par suite s'assurer de la meilleure performance de l'installation mettant en oeuvre ce transpondeur 1.

Pour ce faire, on désigne par :

- CA5 : configuration précédente CA en présence d'une surface vitrée de 5 millimètres d'épaisseur,

- CA10 : configuration précédente CA en présence d'une surface vitrée de 10 millimètres d'épaisseur,

- CB5 : configuration précédente CB en présence d'une surface vitrée de 5 millimètres d'épaisseur,

- CB10 : configuration précédente CB en présence d'une surface vitrée de 10 millimètres d'épaisseur,

- CC5 : configuration précédente CC en présence d'une surface vitrée de 5 millimètres d'épaisseur,

- CC10 : configuration précédente CA en présence d'une surface vitrée de 10 millimètres d'épaisseur,

- CD5 : configuration précédente CD en présence d'une surface vitrée de 5 millimètres d'épaisseur, et

- CD10 : configuration précédente CD en présence d'une surface vitrée de 10 millimètres d'épaisseur.

Dans ces conditions, on peut se rendre compte de l'influence des caractéristiques de la surface vitrée 3 (épaisseur,...) sur l'adaptation du transpondeur 1, sachant que l'adaptation optimale correspond à la zone délimitée par le cercle central en pointillés.

On constate alors que l'adaptation du transpondeur 1 dans la configuration A (transpondeur 1 distant de 5 à 16 millimètres de la surface vitrée 3) est optimale, la présence de la surface vitrée étant quasiment sans effet sur les performances. Par contre, l'adaptation du transpondeur est fortement perturbée dans la configuration D (transpondeur près de la surface vitrée 3).

Ces résultats justifient pleinement l'efficacité de l'éloignement du transpondeur 1 de 5 à 16 millimètres de la surface vitrée 3, laquelle est déposée entre ledit transpondeur 1 et le iecteur/interrogateur 4.

L'invention concerne également une méthode d'optimisation d'une antenne 11 d'impédance Za disposée sur un substrat 6 et associée à circuit électronique 10 d'impédance Zp pour former un transpondeur RFID-UHF, destiné à l'identification d'une surface vitrée 3, contenu dans un boîtier 2 solidarisé par une couche adhésive 5 à la surface vitrée 3 et fonctionnant avec une onde électromagnétique dans un domaine fréquentiel compris entre 860 MHZ et 960 MHZ, ladite antenne 11 étant un dipôle linéaire replié, non fermé comprenant une première branche 20 et une deuxième branche 30 disposées sur le substrat 6 de manière que :

- chaque branche est en forme de U de façon que :

  • la branche 20 possède successivement un tronçon primaire 21, un tronçon intermédiaire 22 et un tronçon secondaire 23 lequel est parallèle au tronçon primaire 21,

  • la branche 30 possède successivement un tronçon primaire 31, un tronçon intermédiaire 32 et un tronçon secondaire 33 lequel est parallèle au tronçon primaire 31,

- le tronçon primaire 21 et le tronçon primaire 31 sont en alignement, de part et d'autre du circuit électrique auquel ils sont reliés,

- le tronçon intermédiaire 22 est parallèle au tronçon intermédiaire 32, ces tronçons intermédiaires (22, 32) étant de plus perpendiculaires par rapport à leur tronçons primaires respectifs (21, 31).

- le tronçon secondaire 23 est en outre disposé entre lesdits tronçons primaires (21, 31) et le tronçon secondaire 33.

- la distance maximale entre les tronçons intermédiaires (22, 32) est fixée et égale à L.

Cette méthode est remarquable en ce que on détermine d'une part les largeurs e1 et e2 respectives des première 20 et deuxième branches 30 ainsi que d'autre part un premier intervalle E entre les deux tronçons primaires (21, 31) et le tronçon secondaire 23 de la première branche 20, un deuxième intervalle C entre les deux tronçons secondaires (23, 33) et un troisième intervalle S entre l'extrémité externe de la première branche 20 et le tronçon intermédiaire 32 en effectuant les étapes suivantes :

a) si Za est supérieur à Zp, on diminue soit e1, soit E ou on augmente e2, alors que si Za est inférieur à Zp, on effectue les opérations inverses (augmentation soit de e1, soit de E ou diminution de e2), et on calcule Za,

b) on répète l'étape a) jusqu'à ce que les parties réelle Ra et imaginaire Xa de Za soient proches respectivement des parties réelle et imaginaire Rp et Xp de Zp,

c) quand l'étape b) est réalisée, on ajuste par calcul Ra et Xa respectivement à Rp et Xp par itérations successives de sorte que :

- si on augmente C, Ra augmente et Xa diminue,

- si on diminue C, Ra diminue et Xa augmente,

- si on fait varier S, Ra reste constante et Xa varie dans le sens inverse.

Bien évidemment, les dimensions e1, e2, E, C et S sont obtenues, en fonction de la fréquence et de la direction de polarisation de l'onde électromagnétique, en tenant compte de la permittivité, de la perméabilité et des dimensions des éléments constitutifs du transpondeur 1, d'un boîtier 2 dudit transpondeur 1 ainsi que du substrat 6, de la surface vitrée 3, d'une couche adhésive 5 disposée entre le boîtier 2 et la surface vitrée 3 et éventuellement une autre couche adhésive 15 disposée entre le substrat 6 et le boîtier 2.

Dans ces conditions, on obtient les meilleures caractéristiques RFID-UHF puisque l'impédance Za de l'antenne est égale à la valeur conjuguée de l'impédance Zp du circuit électronique.

Naturellement, la présente invention est sujette à de nombreuses variations quant à sa mise en oeuvre. Bien qu'un mode de réalisation ait été décrit, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Transpondeur (1) passif RFID-UHF, comprenant une antenne (11) reliée à un circuit électronique (10) lesquels sont disposés sur un substrat (6), adapté à un domaine de fréquences compris sensiblement entre 860 MHZ et 960 MHZ pour l'identification d'une surface vitrée (3) laquelle comprend une première face avant (PF) à diriger vers un lecteur/interrogateur RFID et une deuxième face arrière (DF) pour fixer le transpondeur (1),
**caractérisé en ce que** le substrat (6) est dans un boîtier (2) de forme de parallélépipède rectangle, avec : une première paroi (PP) du boîtier (2) destinée à être opposée à la surface vitrée (3) et liée au substrat (6) ; une deuxième paroi -(DP) du boîtier (2) sensiblement parallèle à première paroi (PP) et ayant à sa surface extérieure un moyen (5) pour fixation dudit boîtier (2) sur la deuxième face (DF) de la surface vitrée (3) ; ledit boîtier (2) ayant entre la première paroi (PP) et la deuxième paroi (DP), des troisième paroi (TP) et quatrième paroi (QP) éloignant l'antenne (11) et le circuit électronique (10) d'une distance d sensiblement comprise entre 5 millimètres et 16 millimètres de la surface extérieure de la deuxième paroi (DP).

2. Transpondeur (1) selon la revendication 1, **caractérisé en ce que** la distance d est sensiblement de 11 millimètres.

3. Transpondeur (1) selon l'une des revendications 1 ou 2, **caractérisé en ce qu'**une couche adhésive (5) est disposée sur le boîtier (2) pour sa fixation à ladite surface vitrée (3).

4. Transpondeur (1) selon la revendication 3, **caractérisé en ce que** le substrat (6) comporte une couche adhésive (15) sur sa première surface (PS), de façon à lier cette première surface (PS) à la surface interne de ladite première paroi (PP) du boîtier (2).

5. Transpondeur (1) selon la revendication 3, **caractérisé en ce que** le substrat (6) est tenu par un système à rainures (16), réalisées par des excroissances locales (17) des troisième (TP) et quatrième (QP) parois du boîtier (2).

6. Transpondeur (1) selon l'une des revendications 3 à 5, **caractérisé en ce que** le boîtier (2) comporte sur la face externe de sa deuxième paroi (DP), une couche adhésive (5) pour la fixation du boîtier (2) et donc du transpondeur (1) sur la deuxième face (DF) de la surface vitrée (3) de destination.

7. Transpondeur (1) selon l'une des revendications 3 à 6, **caractérisé en ce que** le boîtier (2) est sensiblement un parallélépipède rectangle en matériau de type ABS.

8. Transpondeur (1) selon l'une des revendications 1 à 7, **caractérisé en ce que** le substrat (6) est en un matériau à base de résine thermodurcissable époxy revêtu d'une couche métallique conductrice de l'électricité, de façon que l'antenne (11) se présente sous la forme d'un circuit imprimé sur une deuxième surface (DS) du substrat (6), opposée à une première surface (PS) de ce substrat (6).

9. Transpondeur (1) selon l'une des revendications 1 à 8, **caractérisé en ce que** le circuit électronique (10) est monté en mode TSSOP.

10. Transpondeur (1) selon l'une des revendications 1 à 9, **caractérisé en ce que** l'antenne (11) est un dipôle linéaire.

11. Transpondeur (1) selon la revendication 10, **caractérisé en ce que** le dipôle linéaire est replié, non fermé, et comprend une première branche (20) et une deuxième branche (30).

12. Transpondeur (1) selon la revendication 11, **caractérisé en ce que** :

- chaque branche est en forme de U de façon que :

. la première branche (20) possède successivement un tronçon primaire (21), un tronçon intermédiaire (22) et un tronçon secondaire (23) lequel est parallèle au tronçon primaire (21),
. la deuxième branche (30) possède successivement un tronçon primaire (31), un tronçon intermédiaire (32) et un tronçon secondaire (33) lequel est parallèle au tronçon primaire (31),

- le tronçon primaire (21) de la première branche (20) et le tronçon primaire (31) la deuxième branche (30), de part et d'autre du circuit électronique (10) sont reliés audit circuit électronique (10) et sont en alignement l'un par rapport à l'autre,
- le tronçon intermédiaire (22) de la première branche (20) est parallèle au tronçon intermédiaire (32) de la deuxième branche (30), ces tronçons intermédiaires (22, 32) étant de plus perpendiculaires par rapport à leur tronçons primaires respectifs (21, 31) de la première (20) et de la deuxième branche (30),
- le tronçon secondaire (23) de la première branche (20) est en outre disposé entre lesdits tronçons primaires (21, 31) et le tronçon secondaire (33) de la deuxième branche (30).

13. Transpondeur (1) selon la revendication 12, **caractérisé en ce que** l'antenne (11) génère un couplage capacitif en rapprochant les tronçons secondaires (23) et (33) pour empêcher l'alimentation du circuit électronique (10) en courant continu tout en permettant le passage des courants alternatifs.

14. Méthode d'optimisation de l'antenne (11) d'impédance Za, disposée sur le substrat (6) et associée au circuit électronique (10) d'impédance Zp pour former le transpondeur (1) RFID-UHF selon l'une des revendications 1 à 13, contenu dans le boîtier (2) solidarisé par une couche adhésive (5) à une surface vitrée (3), fonctionnant avec une onde électromagnétique dans un domaine de fréquences compris entre 860 MHZ et 960 MHZ, ladite antenne (11) étant un dipôle linéaire replié, non fermé comprenant une première branche (20) et une deuxième branche (30) telles que :

- chaque première (20) et deuxième branche (30) est en forme de U agencé de façon que :

. la première branche (20) possède successivement un tronçon primaire (21), un tronçon intermédiaire (22) et un tronçon secondaire (23) lequel est parallèle au tronçon primaire (21),
. la deuxième branche (30) possède successivement un tronçon primaire (31), un tronçon intermédiaire (32) et un tronçon secondaire (33) lequel est parallèle au tronçon primaire (31),

- le tronçon primaire (21) de la première branche (20) et le tronçon primaire (31) de la deuxième branche (30) de part et d'autre du circuit électronique (10), sont reliés audit circuit électronique (10) et sont en alignement l'un par rapport à l'autre,
- le tronçon intermédiaire (22) de la première branche (20) est parallèle au tronçon intermédiaire (32) de la deuxième branche (30), ces tronçons intermédiaires (22, 32) étant de plus perpendiculaires par rapport à leur tronçons primaires (21, 31) respectivement de la première (20) et de la deuxième branche (30),
- le tronçon secondaire (23) de la première branche (20) est en outre disposé entre lesdits tronçons primaires (21, 31) respectivement de la première (20) et de la deuxième branche (30) et le tronçon secondaire (33) de la deuxième branche (30),
- la distance maximale entre les tronçons intermédiaires (22, 32) respectivement de la première (20) et de la deuxième branche (30) est fixée et égale à L,

**caractérisée en ce qu'**on détermine d'une part les largeurs e1 et e2 respectives des première (20) et deuxième (30) branches ainsi que d'autre part un premier intervalle E entre les deux tronçons primaires (21, 31) respectivement de la première (20) et de la deuxième branche (30), et le tronçon secondaire (23) de la première branche (20) un deuxième intervalle C entre les deux tronçons secondaires (23, 33) respectivement de la première (20) et de la deuxième branche (30) et un troisième intervalle S entre l'extrémité externe de la première branche (20) et le tronçon intermédiaire (32)) de la deuxième branche (30), en effectuant les étapes suivantes :

a) si Za est supérieur à Zp, on diminue soit e1, soit E ou on augmente e2, alors que si Za est inférieur à Zp, on effectue les opérations inverses-augmentation soit de e1, soit de E ou diminution de e2-, et on recalcule Za,
b) on répète l'étape a) jusqu'à ce que les parties réelle Ra et imaginaire Xa de Za soient proches respectivement des parties réelle et imaginaire Rp et Xp de Zp,
c) quand l'étape b) est réalisée, on ajuste par calcul Ra et Xa respectivement à Rp et Xp par itérations successives de sorte que :

- si on augmente C, Ra augmente et Xa diminue,
- si on diminue C, Ra diminue et Xa augmente,
- si on fait varier S, Ra reste constante et Xa varie dans le sens inverse.

**15.** Méthode d'optimisation d'une antenne (11) selon la revendication 14, **caractérisée en ce que** les dimensions e1, e2, E, C et S sont obtenues en fonction de la fréquence et de la direction de polarisation de l'onde électromagnétique, en tenant compte de la permittivité, de la perméabilité et des dimensions des éléments constitutifs du transpondeur (1), du boîtier (2) dudit transpondeur (1) ainsi que du substrat (6), de la surface vitrée (3) et de la couche adhésive (5) disposée entre le boîtier (2) et la surface vitrée (3).

**16.** Méthode d'optimisation d'une antenne (11) selon la revendication 15, **caractérisée en ce que** l'on prend en compte également la permittivité, la perméabilité et les dimensions d'une couche adhésive (15) disposée entre le boîtier (2) et le substrat (6).

**Claims**

**1.** Passive UHF-RFID transponder (1), comprising an antenna (11) connected to an electronic circuit (10) which are arranged on a substrate (6), the transponder being suitable for a frequency range substantially between 860 MHz and 960 MHz for the identification of a glazed surface (3) which comprises a first front face (PF) to be directed towards an RFID reader/interrogator and a second rear face (DF) for fixing the transponder (1), **characterised in that** the substrate (6) is in a housing (2) of rectangular parallelepiped shape, with: a first wall (PP) of the housing (2) intended to be opposite the glazed surface (3) and connected to the substrate (6); a second wall (DP) of the housing (2) substantially parallel to the first wall (PP) and having at its outer surface a means (5) for fixing the said housing (2) to the second face (DF) of the glazed surface (3); the said housing (2) having, between the first wall (PP) and the second wall (DP), a third wall (TP) and a fourth wall (QP) which separate the antenna (11) and the electronic circuit (10) by a distance d substantially between 5 millimetres and 16 millimetres from the outer surface of the second wall (DP).

**2.** Transponder (1) according to Claim 1, **characterised in that** the distance d is substantially 11 millimetres.

**3.** Transponder (1) according to one of Claims 1 and 2, **characterised in that** an adhesive layer (5) is arranged on the housing (2) for fixing the latter to the said glazed surface (3).

4. Transponder (1) according to Claim 3, **characterised in that** the substrate (6) has an adhesive layer (15) on its first surface (PS), so as to connect this first surface (PS) to the inner surface of the said first wall (PP) of the housing (2).

5. Transponder (1) according to Claim 3, **characterised in that** the substrate (6) is held by a system of grooves (16), produced by local protuberances (17) of the third wall (TP) and fourth wall (QP) of the housing (2).

6. Transponder (1) according to one of Claims 3 to 5, **characterised in that** the housing (2) has, on the outer face of its second wall (DP), an adhesive layer (5) for fixing the housing (2) and therefore the transponder (1) to the second face (DF) of the intended glazed surface (3).

7. Transponder (1) according to one of Claims 3 to 6, **characterised in that** the housing (2) is substantially a rectangular parallelepiped made of a material of the ABS type.

8. Transponder (1) according to one of Claims 1 to 7, **characterised in that** the substrate (6) is made of a material based on thermosetting epoxy resin coated with a metallic electrically conductive layer, so that the antenna (11) is in the form of a printed circuit on a second surface (DS) of the substrate (6) opposite a first surface (PS) of this substrate (6).

9. Transponder (1) according to one of Claims 1 to 8, **characterised in that** the electronic circuit (10) is mounted in TSSOP mode.

10. Transponder (1) according to one of Claims 1 to 9, **characterised in that** the antenna (11) is a linear dipole.

11. Transponder (1) according to Claim 10, **characterised in that** the linear dipole is folded but not closed, and comprises a first branch (20) and a second branch (30).

12. Transponder (1) according to Claim 11, **characterised in that**:

    - each branch is U-shaped so that:

        · the first branch (20) has successively a primary section (21), an intermediate section (22) and a secondary section (23) which is parallel to the primary section (21),
        · the second branch (30) has successively a primary section (31), an intermediate section (32) and a secondary section (33) which is parallel to the primary section (31),

    - the primary section (21) of the first branch (20) and the primary section (31) of the second branch (30), on either side of the electronic circuit (10), are connected to the said electronic circuit (10) and are in alignment with respect to one another,
    - the intermediate section (22) of the first branch (20) is parallel to the intermediate section (32) of the second branch (30), these intermediate sections (22, 32) furthermore being perpendicular with respect to their respective primary sections (21, 31) of the first branch (20) and of the second branch (30),
    - the secondary section (23) of the first branch (20) in addition is arranged between the said primary sections (21, 31) and the secondary section (33) of the second branch (30).

13. Transponder (1) according to Claim 12, **characterised in that** the antenna (11) generates a capacitive coupling when the secondary sections (23) and (33) are brought close together, in order to prevent the supply of direct current to the electronic circuit (10) while permitting the passage of alternating currents.

14. Method for optimising the antenna (11) of impedance za arranged on the substrate (6) and associated with the electronic circuit (10) of impedance Zp to form the UHF-RFID transponder (1) according to one of Claims 1 to 13, which is contained in the housing (2) secured by an adhesive layer (5) to a glazed surface (3) and operates with an electromagnetic wave in a frequency range between 860 MHz and 960 MHz, the said antenna (1) being a linear dipole folded but not closed comprising a first branch (20) and a second branch (30) such that:

    - each first branch (20) and second branch (30) is U-shaped so that:

        · the first branch (20) has successively a primary section (21), an intermediate section (22) and a secondary section (23) which is parallel to the primary section (21),
        · the second branch (30) has successively a primary section (31), an intermediate section (32) and a secondary section (33) which is parallel to the primary section (31),

    - the primary section (21) of the first branch (20) and the primary section (31) of the second branch (30), on either side of the electronic circuit (10), are connected to the said electronic circuit (10) and are in alignment with respect to one another,
    - the intermediate section (22) of the first branch (20) is parallel to the intermediate section (32) of the second branch (30), these intermediate sections (22, 32) furthermore being perpendicular with respect to their primary sections (21, 31) of the first branch (20) and of the second branch (30), respectively,
- the secondary section (23) of the first branch (20) in addition is arranged between the said primary sections (21, 31) of the first branch (20) and of the second branch (30), respectively, and the secondary section (33) of the second branch (30),
- the maximum distance between the intermediate sections (22, 32) of the first branch (20) and of the second branch (30), respectively, is fixed and equal to L,

**characterised in that**, on the one hand, the respective widths e1 and e2 of the first branch (20) and the second branch (30) are determined and, on the other hand, a first gap E between the two primary sections (21, 31) of the first branch (20) and the second branch (30), respectively, and the secondary section (23) of the first branch (20), a second gap C between the two secondary sections (23, 33) of the first branch (20) and the second branch (30), respectively, and a third gap S between the outer end of the first branch (20) and the intermediate section (32) of the second branch (30) are determined, by carrying out the following steps:

a) if Za is greater than Zp, either e1 or E is decreased or e2 is increased, whereas if Za is less than Zp, the opposite operations are carried out - increase of either e1 or E or decrease of e2 - and Za is recalculated,
b) step a) is repeated until the real part Ra and imaginary part Xa of Za are close to the real part Rp and imaginary part Xp of Zp,
c) when step b) is completed, Ra and Xa are adjusted by calculation to Rp and Xp, respectively, by successive iterations so that:

- if C is increased, Ra increases and Xa decreases,
- if C is decreased, Ra decreases and Xa increases,
- if S is varied, Ra remains constant and Xa varies in the opposite sense.

15. Method for optimising an antenna (11) according to Claim 14,
**characterised in that** the dimensions e1, e2, E, C and S are obtained as a function of the frequency and the polarising direction of the electromagnetic wave, taking into account the permittivity, the permeability and the dimensions of the constituent elements of the transponder (1), the housing (2) of the said transponder (1) and the substrate (6), the glazed surface (3) and the adhesive layer (5) arranged between the housing (2) and the glazed surface (3).

16. Method for optimising an antenna (11) according to Claim 15,
**characterised in that** the permittivity, the permeability and the dimensions of an adhesive layer (15) arranged between the housing (2) and the substrate (6) are also taken into account.

**Patentansprüche**

1. Passiver UFIF-RFID-Transponder (1) mit einer Antenne (11), die mit einer elektronischen Schaltung (10) verbunden ist, die beide auf einem Substrat (6) angeordnet sind und für einen Frequenzbereich ausgelegt sind, der etwa zwischen 860 MHz und 960 MHz liegt, zur Identifikation einer verglasten Oberfläche (3), die eine erste Vorderseite (PF) aufweist, die auf eine RFID-Leseeinrichtung bzw. einen RFID-Abfragesender gerichtet ist, und eine zweite Rückseite (DF) aufweist zur Befestigung des Transponders (1),
**dadurch gekennzeichnet, dass**
das Substrat (6) in einem Gehäuse (2) mit der Form eines rechtwinkligen Parallelepipeds angeordnet ist, mit: einer ersten Gehäusewand (PP), die dazu bestimmt ist, gegenüber einer verglasten Fläche (3) angeordnet zu werden, und die mit dem Substrat (6) verbunden ist, einer zweiten Gehäusewandung (DP), die im Wesentlichen parallel zur ersten Wandung (PP) verläuft und die auf ihrer Außenseite ein Mittel (5) zur Befestigung des Gehäuses (2) auf der zweiten Seite (DF) der verglasten Fläche (3) aufweist, wobei das Gehäuse (2) zwischen der ersten Wandung (PP) und der zweiten Wandung (DP) eine dritte Wandung (TP) und eine vierte Wandung (QP) aufweist, die die Antenne (11) und den elektronischen Schaltkreis (10) mit einem Abstand (d), der etwa zwischen 5 und 16 mm beträgt, von der äußeren Oberfläche der zweiten Wandung (DP) beabstanden.

2. Transponder (1) nach Anspruch 1, **dadurch gekennzeichnet, dass** der Abstand (d) etwa 11 mm beträgt.

3. Transponder (1) nach einem der Ansprüche 1 oder 2, **dadurch gekennzeichnet, dass** eine klebende Schicht (5) am Gehäuse (2) für dessen Befestigung auf der verglasten Fläche (3) angeordnet ist.

4. Transponder (1) nach Anspruch 3, **dadurch gekennzeichnet, dass** das Substrat (6) eine klebende Schicht (15) auf seiner ersten Oberfläche (PS) aufweist, zum Verbinden dieser ersten Oberfläche (PS) mit der Innenfläche der ersten Wandung (PP) des Gehäuses (2).

**5.** Transponder nach Anspruch 3, **dadurch gekennzeichnet, dass** das Substrat (6) durch ein System von Nuten (16) gehalten wird, die durch lokale Vorsprünge (17) auf der dritten (TP) und der vierten (QP) Wandung des Gehäuses (2) realisiert sind.

**6.** Transponder (1) nach einem der Ansprüche 3 bis 5, **dadurch gekennzeichnet, dass** das Gehäuse (2) auf der Außenseite seiner zweiten Wandung (DP) eine Kleberschicht (5) aufweist für die Befestigung des Gehäuses (2) und somit des Transponders (1) auf der zweiten Fläche (DF) der verglasten Bestimmungsfläche (3).

**7.** Transponder (1) nach einem der Ansprüche 3 bis 6, **dadurch gekennzeichnet, dass** das Gehäuse (2) im Wesentlichen ein rechteckiges Parallelepiped aus einem Material vom Typ ABS ist.

**8.** Transponder (1) nach einem der Ansprüche 1 bis 7, **dadurch gekennzeichnet, dass** das Substrat (6) aus einem Material auf der Basis eines hitzehärtbaren Epoxyharzes hergestellt ist, welches mit einer stromleitenden Metallschicht beschichtet ist, derart, dass die Antenne (11) die Form einer gedruckten Schaltung auf einer zweiten Oberfläche (DS) des Substrats (6) hat, die einer ersten Oberfläche (PS) des Substrats (6) gegenüberliegt.

**9.** Transponder (1) nach einem der Ansprüche 1 bis 8, **dadurch gekennzeichnet, dass** der elektronische Schaltkreis (10) im TSSOP(Thin Shrink Small Outline Package)-Modus montiert ist.

**10.** Transponder (1) nach einem der Ansprüche 1 bis 9, **dadurch gekennzeichnet, dass** die Antenne (11) ein linearer Dipol ist.

**11.** Transponder (1) nach Anspruch 10, **dadurch gekennzeichnet, dass** der lineare Dipol gefaltet und nicht geschlossen ist und einen ersten (20) und einen zweiten (30) Arm aufweist.

**12.** Transponder (1) nach Anspruch (11), **dadurch gekennzeichnet, dass**

- jeder Arm U-förmig ist, derart, dass:

· der erste Arm (20) aufeinanderfolgend einen ersten Abschnitt (21), einen Zwischenabschnitt (22) und einen sekundären Abschnitt (23), der parallel zum ersten Abschnitt (21) verläuft, aufweist,
· der zweite Arm (30) aufeinanderfolgend einen primären Abschnitt (31), einen Zwischenabschnitt (32) und einen sekundären Abschnitt (33), der parallel zum primären Abschnitt (31) verläuft, aufweist,

- der primäre Abschnitt (21) des ersten Armes (20) und der primäre Abschnitt (31) des zweiten Armes (30) zu beiden Seiten des elektronischen Schaltkreises (10) mit dem elektronischen Schaltkreis (10) verbunden sind und zueinander ausgerichtet sind,
- der Zwischenabschnitt (22) des ersten Armes (20) parallel zum Zwischenabschnitt (32) des zweiten Armes (30) verläuft, wobei diese Zwischenabschnitte (22, 32) außerdem senkrecht zu ihren primären Abschnitten (21, 31) des ersten (20) und des zweiten (30) Armes verlaufen,
- der sekundäre Abschnitt (23) des ersten Armes (20) außerdem zwischen den primären Abschnitten (21, 31) und dem sekundären Abschnitt (33) des zweiten Armes (30) angeordnet ist.

**13.** Transponder (1) nach Anspruch 12, **dadurch gekennzeichnet, dass** die Antenne (11) eine kapazitive Kopplung erzeugt dadurch, dass die sekundären Abschnitte (23) und (33) einander angenähert sind, um zu verhindern, dass der elektronische Schaltkreis (10) mit Gleichstrom gespeist wird bei gleichzeitiger Durchlassung von Wechselströmen.

**14.** Verfahren zur Optimierung der Antenne (11) mit einer Impedanz Za, die auf dem Substrat (6) angeordnet und mit einem elektronischen Schaltkreis (10) mit einer Impedanz Zp verbunden ist, um den UHF-RFID-Transponder (1) gemäß einem der Ansprüche 1 bis 13 zu bilden, der in dem Gehäuse (2) enthalten ist, das mit einer Kleberschicht (5) an einer verglasten Fläche (3) befestigt ist, und wobei der Transponder mit elektromagnetischen Wellen in einem Frequenzbereich zwischen 860 MHz und 960 MHz funktioniert, wobei die Antenne (11) ein gefalteter linearer Dipol ist, der nicht geschlossen ist und einen ersten Arm (20) und einen zweiten Arm (30) aufweist, derart, dass:

- jeder der ersten (20) und zweiten (30) Arme U-förmig ist, derart, dass:

· der erste Arm (20) aufeinanderfolgend einen primären Abschnitt (21), einen Zwischenabschnitt (22) und einen sekundären Abschnitt (23), der parallel zum primären Abschnitt (21) verläuft, aufweist,
· der zweite Arm (30) aufeinanderfolgend einen primären Abschnitt (31), einen Zwischenabschnitt (32) und einen sekundären Abschnitt (33), der parallel zum primären Abschnitt (31) verläuft, aufweist,

- der primäre Abschnitt (21) des ersten Armes (20) und der primäre Abschnitt (31) des zweiten Armes (30) zu beiden Seiten des elektronischen Schaltkreises (10) mit dem elektronischen Schaltkreis (10) verbunden sind und zueinander ausgerichtet sind,

- der Zwischenabschnitt (22) des ersten Armes (20) parallel zum Zwischenabschnitt (32) des zweiten Armes (30) verläuft, wobei diese Zwischenabschnitte (22, 32) außerdem senkrecht zu ihren jeweiligen primären Abschnitten (21, 31) des ersten (20) und des zweiten (30) Armes verlaufen,

- der sekundäre Abschnitt (23) des ersten Armes (20) außerdem zwischen den primären Abschnitten (21, 31) jeweils des ersten (20) und des zweiten (30) Arms und dem sekundären Abschnitt (33) des zweiten Armes (30) angeordnet ist,

- der maximale Abstand zwischen den Zwischenabschnitten (22, 32) jeweils des ersten (20) und des zweiten (30) Arms festgelegt und gleich L ist,

**dadurch gekennzeichnet, dass** einerseits die Breiten e1 und e2 der jeweiligen ersten (20) und zweiten (30) Arme sowie andererseits ein erster Abstand (E) zwischen zwei primären Abschnitten (21, 31) jeweils des ersten (20) und des zweiten (30) Arms und dem sekundären Abschnitt (23) des ersten Arms (20) und ein zweiter Abstand C zwischen den beiden sekundären Abschnitten (23, 33) jeweils des ersten (20) und des zweiten (30) Arms und ein dritter Abstand (S) zwischen dem äußeren Ende des ersten Arms (20) und dem Zwischenabschnitt (32) des zweiten Arms (30) bestimmt werden, indem folgende Schritte ausgeführt werden:

a) wenn Za größer ist als Zp, entweder e1 oder E verkleinert werden oder e2 vergrößert wird, während wenn Za kleiner ist als Zp, die umgekehrten Schritte ausgeführt werden - Erhöhung entweder von e1 oder von E oder Verkleinerung von e2 - und Za erneut berechnet wird,

b) Schritt a) wiederholt wird, bis die Realteile Ra und die Imaginärteile Xa und Za jeweils nahe den Real- und Imaginärteilen Rp und Xp von Zp sind,

c) wenn Schritt b) ausgeführt ist, Ra und Xa jeweils durch sukzessive Iteration an Rp und Xp angepasst werden, derart, dass:

- wenn man C erhöht, Ra steigt und Xa kleiner wird,

- wenn man C verkleinert, Ra kleiner wird und Xa steigt,

- wenn S variiert wird, Ra konstant bleibt und Xa im entgegengesetzten Sinne variiert.

**15.** Verfahren zur Optimierung einer Antenne (11) nach Anspruch 14, **dadurch gekennzeichnet, dass** die Abmessungen e1, e2, E, C und S erhalten werden in Abhängigkeit von der Frequenz und der Polarisierungsrichtung der elektromagnetischen Wellen unter Berücksichtigung der Permittivität, der Permeabilität und der Abmessungen der den Transponder (1) bildenden Elemente, des Gehäuses (2) des Transponders (1) sowie des Substrats (6), der verglasten Oberfläche (3) und der Kleberschicht (5), die zwischen dem Gehäuse (2) und der verglasten Fläche (3) angeordnet ist.

**16.** Verfahren zur Optimierung einer Antenne (11) nach Anspruch 15, **dadurch gekennzeichnet, dass** ebenfalls die Permittivität, die Permeabilität und die Abmessungen einer Kleberschicht (15), die zwischen dem Gehäuse (2) und dem Substrat (6) angeordnet ist, berücksichtigt werden.

Fig.1

## Fig.2

## Fig.3

## Fig.4

Fig.5

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- GB 2308527 A
- US 6121880 A
- US 6275157 B
- WO 03090151 A